# EUROPEAN PATENT APPLICATION

(11) **EP 4 610 533 A1**
(43) Date of publication of application: **03.09.2025**
(21) Application number: 22963471.2
(22) Date of filing: 26.10.2022
(51) Int. Cl.: F16L 11/04, B32B 1/08, B32B 27/30

(54) **FLEXIBLE TUBE**

(30) Priority: 25.10.2022 JP 2022170287
(71) Applicant: Toyox Co., Ltd., Kurobe-shi Toyama 938-8585 (JP)
(72) Inventor: NUMATA Kenichi, Kurobe-shi, Toyama 938-8585 (JP); OKURA Masaru, Kurobe-shi, Toyama 938-8585 (JP)
(74) Representative: Gill Jennings & Every LLP
(86) International application number: PCT/JP2022/039996
(87) International publication number: WO 2024/089822

(57) **Abstract**

[Problem] To provide a flexible tube, having a smaller amount of eluted substances and being flexible, which is used in e.g. manufacturing plants for food including beverages, cosmetics, perfume, pharmaceutical products and others.

[Solution] The flexible tube of the present invention is a flexible tube, including at least a first resin layer which includes a fluororesin and has a thickness of 0.05 to 0.5 mm and accounts for 1 to 16% of an overall thickness of the flexible tube, and a second resin layer which includes a thermoplastic resin different from the first resin layer, wherein the fluororesin has a flexural modulus of 500 to 1200 MPa, as measured by ASTM D790, and an amount of eluted substances obtained by analyzing an eluate obtained after putting heptane as a solvent into the flexible tube and allowing the flexible tube to stand at 25°C for 60 minutes is 150 ppm or less.

## Description

### TECHNICAL FIELD

The present invention relates to a flexible tube, having a smaller amount of eluted substances and being flexible, which is used in e.g. manufacturing plants for food including beverages, cosmetics, perfume, pharmaceutical products and others.

### BACKGROUND ART

Fluororesins have excellent characteristics such as chemical resistance, heat resistance, weather resistance and gas barrier properties and a smaller amount of eluted substances, and flexible tubes, using a fluororesin as a material directly coming into contact with fluid, have been used in various industrial fields. Fluororesins, however, are hard and expensive, and thus a laminated hose is proposed in which a thermoplastic resin is laminated on the outer circumferential surface to reduce the amount of the fluororesin used.

Patent Literature 1, for example, discloses a fuel hose in which an ethylene/tetrafluoroethylene copolymer (hereinafter, ETFE) having excellent fuel barrier properties, chemical resistance and heat resistance is used as an inner layer material and polyamide having excellent mechanical characteristics and durability is laminated as an outer layer material. Patent Literature 2 also discloses a fuel hose which has high resistance to hydrocarbon fuel and fuel vapor by covalently binding the inner layer including PVDF and the outer layer including a thermoplastic resin.

These fuel hoses, however, have excellent fuel barrier properties and chemical resistance but have poor flexibility, and there has been a problem in that when a flexible tube is placed with the radius of a circle drawn by the flexible tube (bending radius) being small in applications required to have a high degree of freedom of tube arrangement particularly in e.g. manufacturing plants for food including beverages, cosmetics, perfume, pharmaceutical products and others, the flexible tube is kinked to block a flow channel.

Therefore, a laminated hose is proposed in which more flexible polyurethane is used as a thermoplastic resin laminated on the outer circumferential surface.

Patent Literature 3 discloses food hoses having excellent flexibility, in which a polyamide layer and a polyurethane layer are laminated on the inner layer including ETFE.

In manufacturing plants for e.g. food, cosmetics, perfume and pharmaceutical products, however, it is required to suppress the elution of e.g. plasticizers from flexible tubes for the quality control of products in the manufacturing process. In these food hoses the thickness of the ETFE layer is not provided, and there has been a problem in that when the thickness of the ETFE layer is thinner to obtain flexibility, e.g. a plasticizer contained in the polyamide layer passes through the ETFE layer and elutes to fluid.

### CITATION LIST

### PATENT LITERATURE

Patent Literature 1: Japanese Patent No. 4247103
Patent Literature 2: Japanese Translation of PCT International Application No. 2020-535986
Patent Literature 3: Japanese Patent No. 4696293
international publication of Patent Application No. 2020-535986 below

### SUMMARY OF INVENTION

### TECHNICAL PROBLEM

An object of the present invention is to provide a flexible tube, having a smaller amount of eluted substances and being flexible, which is used in e.g. manufacturing plants for food including beverages, cosmetics, perfume, pharmaceutical products and others.

### SOLUTION TO PROBLEM

Such object is achieved by the present invention (1) to (2) described below.
(1) A flexible tube, including at least a first resin layer which includes a fluororesin and has a thickness of 0.05 to 0.5 mm and accounts for 1 to 16% of an overall thickness of the flexible tube, and a second resin layer which includes a thermoplastic resin different from the first resin layer, wherein the fluororesin has a flexural modulus of 500 to 1200 MPa, as measured by ASTM D790, and the amount of eluted substances obtained by analyzing an eluate obtained after putting heptane as a solvent into the flexible tube and allowing the flexible tube to stand at 25°C for 60 minutes is 150 ppm or less.
(2) The flexible tube according to (1), wherein the amount of eluted substances obtained by analyzing an eluate obtained after putting heptane as a solvent into the flexible tube and allowing the flexible tube to stand at 80°C for 90 minutes is 150 ppm or less.

### ADVANTAGEOUS EFFECT OF INVENTION

According to the present invention, it is possible to obtain a flexible tube, having a smaller amount of eluted substances and being flexible, which is used in e.g. manufacturing plants for food including beverages, cosmetics, perfume, pharmaceutical products and others.

### BRIEF DESCRIPTION OF DRAWING

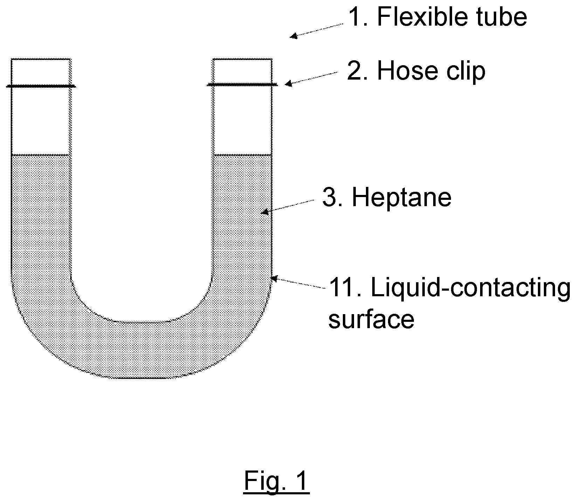

[Fig. 1] Fig. 1 is a schematic diagram of the elution test of a flexible tube in one embodiment of the present invention.

### DESCRIPTION OF EMBODIMENT

A suitable embodiment of the flexible tube of the present invention will now be described in detail.

The flexible tube according to the embodiment of the present invention is a flexible tube, having a smaller amount of eluted substances and being flexible, which is used in e.g. manufacturing plants for food including beverages, cosmetics, perfume, pharmaceutical products and others.

### <First resin layer>

The first resin layer is formed from a fluororesin. In order to impart electrical conductivity, a carbon-based or metal-based electroconductive filler may be added thereto; however, it is not limited thereto.

The thickness of the first resin layer is preferably 0.05 to 0.5 mm and more preferably 0.1 to 0.4 mm. When the thickness is thinner than 0.05 mm, eluted substances such as a plasticizer in the second resin layer penetrate the first resin layer and contaminate fluid, and such a flexible tube cannot be used as a flexible tube, through which food, cosmetics, perfume, pharmaceutical products and raw materials thereof are allowed to flow. Meanwhile, when the thickness is thicker than 0.5 mm, the penetration of eluted substances can be suppressed, but kinks are easily caused when bending such a flexible tube, and thus a flexible tube which can be placed with a small bending radius cannot be obtained. Therefore, when the thickness is within the range, the flexibility and penetration resistance of the first resin layer to a plasticizer are improved, and thus a flexible tube, which has a smaller amount of eluted substances, is not kinked even when it is placed with a smaller bending radius, and is more flexible than ever before, can be obtained.

In addition, in a case where the thickness of the first resin layer is larger than 16% with respect to the overall thickness of the flexible tube, when bending the flexible tube, the other layers on the outer side of the first resin layer cannot retain the cross-sectional circle shape of the first resin layer, and the cross-sectional shape becomes flat to cause kinks. It is not preferred that the thickness of the first resin layer be smaller than 1% with respect to the overall thickness of the flexible tube because, on the inside in the bending direction when bending the flexible tube, the first resin layer follows the movements in the compression direction of the other layers on the outer side thereof to cause wrinkles on the first resin layer, and then the flexible tube is kinked starting from the wrinkles.

The first resin layer is preferably formed from a material which does not contaminate fluid and is not influenced by e.g. corrosion due to the fluid. It is specifically a fluororesin, and examples thereof include, but not limited to, an ethylene/tetrafluoroethylene copolymer (ETFE), polyvinylfluoride (PVF), polyvinylidenefluoride (PVDF), an ethylene/chlorotrifluoroethylene copolymer (ECTFE), a tetrafluoroethylene/hexafluoropropylene/vinylidenefluoride terpolymer (THV), a tetrafluoroethylene/perfluoroalkoxyethylene copolymer (PFA), a tetrafluoroethylene-hexafluoropropylene copolymer (FEP), and polychlorotrifluoroethylene (PCTFE). The fluororesin is preferably ETFE having high mechanical strength and melt formability, and more preferably adhesive ETFE to which an acid-modified adhesive functional group is imparted.

The fluororesin has a flexural modulus of 500 to 1200 MPa, as measured by ASTM D790. The flexural modulus depends on the number average molecular weight of fluororesin, and can be a criterion for the number average molecular weight. That is, a higher flexural modulus indicates a higher number average molecular weight, and a lower flexural modulus indicates a lower number average molecular weight. Therefore, when the flexural modulus is less than 500 MPa, the number average molecular weight is low leading to less molecular chain entanglement and a larger free volume between molecular chains, and thus eluted substances easily penetrate there. When the flexural modulus is larger than 1200 MPa, the number average molecular weight is high and melt formability is reduced, and thus a flexible tube, which is flexible, cannot be obtained. The flexural modulus is preferably 600 to 1100 MPa.

Here, the standards for flexible tubes used for food, for example, are " (EU) Reg. No. 10/2011 (Plastic Implementation Measure)" in EU and "General specifications for Apparatus, Containers and Packaging in Specifications and Standards for Foods, Food Additives, Etc. (Public Notice of the Ministry of Health and Welfare No. 370 of 1959)" in Japan. According to Japan's specifications and standards, heptane, a pseudo-solvent for fat and oil and high-fat food, is put as an eluate into a flexible tube, which is allowed to stand at 25°C for 60 minutes, and the standard value is 150 ppm or less as the amount of eluted substances in the eluate. When the amount is above 150 ppm, the standard value, there is a problem in that eluted substances remain in the body and consequently risks such as carcinogenicity increase. In the flexible tube of the present invention, the amount of eluted substances obtained by analyzing an eluate obtained after putting heptane as a solvent into the flexible tube and allowing the flexible tube to stand at 25°C for 60 minutes is also 150 ppm or less. The amount is preferably 120 ppm or less, more preferably 90 ppm or less and further preferably 60 ppm or less.

In the flexible tube of the present invention, furthermore, the amount of eluted substances obtained by analyzing an eluate obtained after putting heptane as a solvent into the flexible tube and allowing the flexible tube to stand at 80°C (the boiling point of heptane is 98°C) for 60 minutes is 150 ppm or less. The amount is preferably 120 ppm or less, more preferably 90 ppm or less and further preferably 60 ppm or less.

In the flexible tube of the present invention, furthermore, the amount of eluted substances obtained by analyzing an eluate obtained after putting heptane as a solvent into the flexible tube and allowing the flexible tube to stand at 80°C (the boiling point of heptane is 98°C) for 90 minutes is preferably 150 ppm or less. Even when the temperature and elution time are set to conditions in which elution is easily caused, the elution amount is lower than the reference value of Food Sanitation Act, and thus in the flexible tube of the present invention, the elution amount is extremely low and risks such as carcinogenicity due to the eluted substances remaining in the body are lower than ever before.

A polar substance including alcohol, such as alcohol beverages, can be allowed to flow in a flexible tube which meets the above conditions and is used for food, and the amount of eluted substances obtained by analyzing an eluate obtained after putting 20% ethanol, a pseudo-solvent for alcohol beverages in the specifications and standards, as a solvent into the flexible tube and allowing the flexible tube to stand at 60°C for 30 minutes is more preferably not more than 30 ppm, the standard value.

### <Second resin layer>

The second resin layer is formed from a thermoplastic resin different from the first resin layer, and additives may be added thereto to display functions such as flexibility, heat stability, light stability and weather resistance. The additives are e.g. a plasticizer to impart flexibility and a stabilizer, and examples of the plasticizer include, but not limited to, a hydroxybenzoic acid alkyl ester-based plasticizer with a molecular weight of 200 to 400.

For the second resin layer, a material with flexibility and excellent adhesive properties to fluororesins is preferably used. Examples of the thermoplastic resin include, but not limited to, polyamide, polyvinyl chloride, a polyamide-based elastomer, a polyurethane-based elastomer, a polystyrene-based elastomer, an olefin-based elastomer, intermixed materials thereof, and modified resins obtained by treating the above in conventionally known methods. Preferred thermoplastic resins are Polyamide 11, Polyamide 12, a polyamide-based elastomer and intermixed materials thereof, which have a flexural modulus of 200 to 1300 MPa measured by ISO178.

The thickness of the second resin layer is preferably 0.05 to 0.4 mm to obtain mechanical strength and flexibility and more preferably 0.1 to 0.35 mm. It is preferred that the thickness be within the range because the second resin layer has excellent flexibility.

### <Third resin layer>

The third resin layer is formed from a thermoplastic resin, and additives may be added thereto to display functions such as flexibility, heat stability, light stability and weather resistance. Examples of the additives include, but not limited to, a plasticizer to impart flexibility, and a stabilizer.

For the third resin layer, a material with excellent flexibility is preferably used. Examples of the thermoplastic resin include, but not limited to, polyamide, polyvinyl chloride, a polyamide-based elastomer, a polyurethane-based elastomer, a polystyrene-based elastomer, an olefin-based elastomer, and intermixed materials thereof. Preferred thermoplastic resins are polyurethane-based elastomers with low mechanical strength and excellent flexibility, and more preferred thermoplastic resins are ester-based, capro-based, carbonate-based and ether-based polyurethane elastomers with a shore A hardness of 60 to 95 and a rebound resilience of 40 to 70% measured by JIS K 7311.

The thickness of the third resin layer is preferably 0.1 to 5.0 mm and more preferably 0.5 to 3.5 mm to impart adequate flexibility to the flexible tube.

### <Reinforcement material>

The flexible tube of the present invention may be reinforced by adding a reinforcement material between the layers next to each other. Examples of the reinforcement material include multiple braids or a single braid including e.g. polyester, PET, nylon (registered trademark) or aramid fiber, an olefin resin, a monofilament including e.g. a polyester resin, a multifilament obtained by weaving thin monofilaments (single fibers), a flat yarn (or tape yarn) including a tape-shaped yarn, a metal wire including e.g. stainless, or a coil including a hard material classified into stainless, and the like.

### <Laminate structure>

The flexible tube of the present invention is a flexible tube having a laminate structure in which the first resin layer including a fluororesin and the second resin layer including a thermoplastic resin in the present invention are laminated.

In the flexible tube of the present invention, the first resin layer has chemical resistance and a smaller amount of eluted substances, and the second resin layer has flexibility and adhesive properties to the first resin layer, and therefore a flexible tube can be produced, which has excellent chemical resistance and an extremely small amount of eluted substances and is not easily broken compared to a single layer tube including a fluororesin. Furthermore, a flexible tube, which is not kinked even when it is placed with a small bending radius and is more flexible than ever before, can be obtained by laminating a flexible third resin layer.

As long as the basic laminate structure is included, a flexible tube obtained by further laminating another layer including thermoplastic resin on the basic structure may be produced, and a reinforcement material may be included between any layers next to each other. The number of layers in the whole flexible tube is not particularly restricted, and is at least three or more layers, normally 3 to 8 layers and preferably 3 to 5 layers.

The overall thickness of the flexible tube is determined considering the internal diameter of the flexible tube and various characteristics such as flexibility and pressure resistance depending on applications. From the viewpoint of pressure resistance, kink resistance and handling, it is preferred that as the internal diameter of the flexible tube increases, the thickness increase. Specifically, the ratio (E) = (D)/(C) of the internal diameter of the flexible tube (C) and the overall thickness of the flexible tube (D), is preferably 0.4 or less. It is also preferred that the ratio (H) = (G) /(F) of the thickness of the first resin layer (F) and the thickness of the third resin layer (G) be 4.0 or more because the thickness of the third resin layer is enough to impart flexibility to the flexible tube.

Furthermore, from (E) and (H), the thickness of the first resin layer and the thickness of the third resin layer can be provided with respect to the overall thickness of the flexible tube which varies depending on the internal diameter, and it is preferred that (E) x (H) meet a range from 0.8 to 1.7 because a thickness at which the flat shape and wrinkles causing kinks when bending the flexible tube are suppressed is obtained.

As the internal diameter of the flexible tube increases, the bending radius (R) increases. In the flexible tube of the present invention, a value (R)/(C) obtained by dividing the bending radius (R) by the internal diameter (C) is less than 15, and it is preferred that (R)/(C) be less than 15 because kinks are not caused even when the flexible tube is placed with a small bending radius. The value is preferably less than 13 and further preferably less than 11.

### <Laminating method>

As the method for forming the flexible tube of the present invention, there are (1) a method for forming a flexible tube having a two-layer structure at one time by coextrusion, in which an adhesive fluororesin forming the first resin layer and a thermoplastic resin forming the second resin layer are coextruded in a molten state to attach both the layers, and (2) a method in which the outer surface of a tube obtained by extruding a fluororesin forming the first resin layer is modified by a discharge treatment such as a plasma discharge or corona discharge or a drug solution treatment such as sodium etching, various adhesive functional groups are introduced to the surface and then a thermoplastic resin forming the second resin layer is extruded and laminated on the fluororesin tube having the treated outer surface, and the like.

From the viewpoint of productivity, a method using coextrusion is preferred, and in order to improve adhesiveness between layers, a fluororesin having adhesive properties can be used for the first resin layer.

Examples of the acid-modified fluororesin having adhesive properties include "Fluon (registered trademark) LM-ETFE AH Series (manufactured by AGC Inc.)" and "Neoflon (registered trademark) EFEP RP series (manufactured by DAIKIN INDUSTRIES, LTD.)" and the like as ETFE to which an adhesive functional group is introduced.

As an example, in a case where an acid-modified adhesive fluororesin is used for the first resin layer, when using polyamide having good compatibility with the acid-modified adhesive fluororesin for the second resin layer and a polyurethane elastomer having good compatibility with polyamide and excellent heat resistance for the third resin layer, a flexible tube, having excellent chemical resistance and heat resistance and being flexible, can be obtained by simultaneously laminating three layers by coextrusion.

The flexible tube of the present invention has a smaller amount of eluted substances and excellent flexibility. In addition, because of e.g. excellent chemical resistance, heat resistance, corrosion resistance, oil resistance and weather resistance, the flexible tube can be suitably used as tubes and hoses for e.g. food, cosmetics, perfume, pharmaceutical products, medical care, fuels, coolants, pure water and inks.

### EXAMPLE 1

The present invention will now be described in detail by way of Examples thereof. However, the technical scope of the present invention is not limited thereto.

It should be noted that elution properties and flexibility, which are measurement items, were measured by methods described below.

### <Elution properties>

From the flexible tubes in Examples 1 to 30 and Comparative Examples 1 to 7, respective 5 test samples were cut out so that the surface area of the liquid-contacting part when putting heptane thereinto was 400 cm². As shown in Fig. 1, 25°C heptane was put into a test sample, both ends of the test sample was sealed with hose clips, and the flexible tube was allowed to stand in a 25°C thermostat bath for 60 minutes. The elution properties were judged from the amount of evaporation residue in an amount collected from the test solution as follows:
Very good(⊚); the elution amount is 90 ppm or less - > risks such as carcinogenicity due to eluted substances remaining in the body are extremely low, and the obtained flexible tube can be safely used;
Good(○); the elution amount is above 90 ppm and 120 ppm or less -> the obtained flexible tube can be safely used but there is a slight concern;
Fair (△); above 120 ppm and 150 ppm or less -> the obtained flexible tube can be safely used but there is a concern; and
Poor(×); above 150 ppm -> the obtained flexible tube does not meet the standard value and cannot be used.

In addition, the same test was performed at 80°C for 90 minutes, and the elution properties were judged from the amount of evaporation residue in an amount collected from the test solution as follows:
Very good(⊚); the elution amount is 90 ppm or less - > risks such as carcinogenicity due to eluted substances remaining in the body are extremely low, and the obtained flexible tube can be safely used;
Good(○); the elution amount is above 90 ppm and 120 ppm or less -> the obtained flexible tube can be safely used but there is a slight concern;
Fair (△); above 120 ppm and 150 ppm or less -> the obtained flexible tube can be safely used but there is a concern; and
Poor(×); above 150 ppm -> the obtained flexible tube does not meet the standard value and cannot be used.

### <Flexibility>

The flexibility was evaluated by bending the flexible tubes in Examples 1 to 30 and Comparative Examples 1 to 7. Each flexible tube was bent under a 23°C environment so that a circle with a ratio of diameters in two orthogonal directions being 1:1 was obtained, and the radius R (bending radius) of the circle drawn by the flexible tube when the flexible tube was flattened so as to have an outer diameter being 90% of the normal diameter, was measured. In general, as the internal diameter of a flexible tube increases, the bending radius R increases. Therefore, by using the ratio of the internal diameter (C) and the bending radius (R) of the flexible tube,
(R)/(C) being less than 11 was evaluated to be very good (⊚), (R)/(C) being 11 or more and less than 13 was evaluated to be good(○), (R)/(C) being 13 or more and less than 15 was evaluated to be fair(△), and(R)/(C) being 15 or more was evaluated to be poor(×).

### <Overall evaluation>

Based on the very good (⊚) to poor(×) evaluations of the elution amount and flexibility at 25°C, overall evaluations were made at 5 levels: 1 point when at least one of the evaluations was poor(×), 2 points when at least one of the evaluations was fair(△), 3 points when at least one of the evaluation was good(○), 3 points when both the evaluations were very good(⊚) and the elution amount at 80°C was evaluated to be fair(△), 4 points when both the evaluations were very good(⊚) and the elution amount at 80°C was evaluated to be good(○), and 5 points when both the evaluations were very good (⊚) and the elution amount at 80°C was also evaluated to be very good (⊚).

In order to make the flexible tubes shown in Examples, adhesive ETFEs 1 to 7 having characteristics described below, and PFA1 after plasma discharge were prepared.

The flexural modulus of the adhesive ETFEs 1 to 7 was controlled by changing the molar ratio of ethylene and tetrafluoroethylene at the time of polymerization, and adhesive properties were obtained by simultaneously adding itaconic acid anhydride in an amount corresponding to 0.4 mol% with respect to the total number of moles of ethylene and tetrafluoroethylene added at the time of polymerization.

PFA1 after plasma discharge was obtained by modifying the surface of PFA with a flexural modulus of 800 MPa using plasma treatment and introducing carboxyl group thereinto.

The plasma treatment was performed in a method described in Examples of Japanese Patent No. 5935051. A mixed gas obtained by mixing argon, carbon dioxide and methane in a proportion of 95 : 4 : 1 was used as a gas for plasma treatment, and carboxy group was introduced in an amount corresponding to 0.4 mol% with respect to the total number of moles of tetrafluoroethylene and perfluoroalkoxyethylene.

The flexural modulus was measured by ASTM D790.
Adhesive ETFE 1 has a flexural modulus of 1200 MPa,
Adhesive ETFE 2 has a flexural modulus of 770 MPa,
Adhesive ETFE 3 has a flexural modulus of 500 MPa,
Adhesive ETFE 4 has a flexural modulus of 1000 MPa,
Adhesive ETFE 5 has a flexural modulus of 600 MPa,
Adhesive ETFE 6 has a flexural modulus of 1500 MPa, and
Adhesive ETFE 7 has a flexural modulus of 400 MPa.

In Example 1, as shown in Table 1, a first resin layer including adhesive ETFE 1, a second resin layer including Polyamide 12 (ZL1105 manufactured by Polyplastics-Evonik Corporation) with a flexural modulus of 300 MPa to which a hydroxybenzoic acid alkyl ester-based plasticizer with a molecular weight of 250 to 350 was added as a plasticizer, and a third resin layer including a carbonate-based polyurethane elastomer (P-880 manufactured by Dainichiseika Color & Chemicals Mfg. Co., Ltd.) with a shore A hardness of 83 and a rebound resilience of 45% were melt and integrally formed by coextrusion so that the thickness of the first resin layer was 0.5 mm, the thickness of the second resin layer was 0.2 mm and the thickness of the third resin layer was 1.3 mm. Subsequently, polyester fiber was wound thereon using a braiding machine, and the outermost layer with a thickness of 1.5 mm including a carbonate-based polyurethane elastomer (P-880 manufactured by Dainichiseika Color & Chemicals Mfg. Co., Ltd.) was extruded and laminated on the outer side of the polyester fiber to obtain a flexible tube with an internal diameter of 19 mm and an outer diameter of 26 mm.

**[Table 1]**

| **Example** | | 1 | 2 | 3 | 4 | | 5 6 | 7 | 8 | 9 | 10 | 11 | 12 | 13 | 14 | 15 |
|---|---|---|---|---|---|---|---|---|---|---|---|---|---|---|---|---|
| | Number of layers | 4 | 4 | 4 | 4 | | 4 4 | 4 | 4 | 4 | 4 | 4 | 4 | 4 | 4 | 4 |
| First resin layer | Material | Adhesive ETFE1 | Adhesive ETFE1 | Adhesive ETFE1 | Adhesive ETFE2 | Adhesive ETFE2 | Adhesive ETFE2 | Adhesive ETFE3 | Adhesive ETFE3 | Adhesive ETFE3 | Adhesive ETFE1 | Adhesive ETFE1 | Adhesive ETFE1 | Adhesive ETFE4 | Adhesive ETFE2 | Adhesive ETFE2 |
| | Thickness | 0.5 | 0.5 | 0.5 | 0.5 | 0.5 | 0.5 | 0.5 | 0.5 | 0.5 | 0.2 | 0.2 | 0.2 | 0.2 | 0.2 | 0.2 |
| | F thickness/overall thickness% | 14.3 | 5.6 | 2 | 14.3 | 5.6 | 2 | 14.3 | 5.6 | 2 | 15.4 | 5.7 | 2 | 15.4 | 15.4 | 5.7 |
| | Flexural modulus | 1200 | 1200 | 1200 | 770 | 770 | 770 | 500 | 500 | 500 | 1200 | 1200 | 1200 | 1000 | 770 | 770 |
| Second resin layer | Material | ZL1105 | ZL1105 | ZL1105 | ZL1105 | ZL1105 | ZL1105 | ZL1105 | ZL1105 | ZL1105 | ZL1105 | ZL1105 | ZL1105 | ZL1105 | ZL1105 | ZL1105 |
| | Thickness | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Third resin layer | Material | P-880 | P-880 | P-880 | P-880 | P-880 | P-880 | P-880 | P-880 | P-880 | P-880 | P-880 | P-880 | P-880 | P-880 | P-880 |
| | Thickness | 1.3 | 1.3 | 1.3 | 1.3 | | 1.3 1.3 | 1.3 | 1.3 | 1.3 | 0.3 | 1.6 | 1.6 | 1.6 | 1.6 | 1.6 |
| Reinforcement layer | Material | Polyester fiber | Polyester fiber | Polyester fiber | Polyester fiber | Polyester fiber | Polyester fiber | Polyester fiber | Polyester fiber | Polyester fiber | Polyester fiber | Polyester fiber | Polyester fiber | Polyester fiber | Polyester fiber | Polyester fiber |
| Outerm ost layer | Material | P-880 | P-880 | P-880 | P-880 | P-880 | P-880 | P-880 | P-880 | P-880 | P-880 | P-880 | P-880 | P-880 | P-880 | P-880 |
| | Thickness | 1.5 | 7.0 | 23.0 | 1.5 | | 7.0 23.0 | 1.5 | 7.0 | 23.0 | 0.6 | 1.5 | 8.0 | 1.5 | 0.6 | 1.5 |
| Elution amount (25°C) | Judgment | ⊚ | ⊚ | ⊚ | ⊚ | ⊚ | ⊚ | ⊚ | ⊚ | ⊚ | ⊚ | ⊚ | ⊚ | ⊚ | ⊚ | ⊚ |
| Elution amount (80°C) | Judgment | ⊚ | ⊚ | ⊚ | ⊚ | ⊚ | ⊚ | ⊚ | ⊚ | ⊚ | ⊚ | ⊚ | ⊚ | ⊚ | ⊚ | ⊚ |
| Flexibility | Judgment | O | ○ | Δ | ○ | ○ | ○ | ○ | ○ | ○ | ⊚ | ⊚ | ⊚ | ⊚ | ⊚ | ⊚ |
| Overall evaluation | Judgment | 3 | 3 | 2 | 3 | 3 | 3 | 3 | 3 | 3 | 5 | 5 | 5 | 5 | 5 | 5 |
| | | | | | | | | | | | | | | | | |

| **Example** | | 16 | 17 | 18 | 19 | 20 | 21 | 22 | 23 | 24 | 25 | 26 | 27 | 28 | 29 | 30 |
|---|---|---|---|---|---|---|---|---|---|---|---|---|---|---|---|---|
| | Number of layers | 4 | 4 | 4 | 4 | 4 | 4 | 4 | 4 | 4 | 4 | 4 | 4 | 4 | 4 | 4 |
| First resin layer | Material | Adhesive ETFE2 | Adhesive ETFE5 | Adhesive ETFE3 | Adhesive ETFE3 | Adhesive ETFE3 | Adhesive ETFE1 | Adhesive ETFE1 | Adhesive ETFE1 | Adhesive ETFE2 | Adhesive ETFE2 | Adhesive ETFE2 | Adhesive ETFE3 | Adhesive ETFE3 | Adhesive ETFE3 | PFA1 |
| | Thickness | 0.2 | 0.2 | 0.2 | 0.2 | 0.2 | 0.05 | 0.05 | 0.05 | 0.05 | 0.05 | 0.05 | 0.05 | 0.05 | 0.05 | 0.2 |
| | F thickness/overall thickness% | 2 | 5.7 | 15.4 | 5.7 | 2 | 9 | 5 | 1.4 | 9 | 5 | 1.4 | 9 | 5 | 1.4 | 5.7 |
| | Flexural modulus | 770 | 600 | 500 | 500 | 500 | 1200 | 1200 | 1200 | 770 | 770 | 770 | 500 | 500 | 500 | 800 |
| Second resin layer | Material | ZL1105 | ZL1105 | ZL1105 | ZL1105 | ZL1105 | ZL1105 | ZL1105 | ZL1105 | ZL1105 | ZL1105 | ZL1105 | ZL1105 | ZL1105 | ZL1105 | ZL1105 |
| | Thickness | 0.2 | 0.2 | 0.2 | 0.2 | 0.2 | 0.1 | 0.1 | 0.2 | 0.2 | 0.2 | 0.2 | 0.2 | 0.2 | 0.2 | 0.2 |
| Third resin layer | Material | P-880 | P-880 | P-880 | P-880 | P-880 | P-880 | P-880 | P-880 | P-880 | P-880 | P-880 | P-880 | P-880 | P-880 | P-880 |
| | Thickness | 1.6 | 1.6 | 1.6 | 1.6 | 1.6 | 0.2 | 0.25 | 1.75 | 1.75 | 1.75 | 1.75 | 1.75 | 1.75 | 1.75 | 1.6 |
| Reinforcement layer | Material | Polyester fiber | Polyester fiber | Polyester fiber | Polyester fiber | Polyester fiber | Polyester fiber | Polyester fiber | Polyester fiber | Polyester fiber | Polyester fiber | Polyester fiber | Polyester fiber | Polyester fiber | Polyester fiber | Polyester fiber |
| Outerm ost layer | Material | P-880 | P-880 | P-880 | P-880 | P-880 | P-880 | P-880 | P-880 | P-880 | P-880 | P-880 | P-880 | P-880 | P-880 | P-880 |
| | Thickness | 8.0 | 1.5 | 0.6 | 1.5 | 8.0 | 0.2 | 0.6 | 1.5 | 0.2 | 0.6 | 1.5 | 0.2 | 0.6 | 1.5 | 1.5 |
| Elution amount (25°C) | Judgment | ⊚ | ⊚ | ⊚ | ⊚ | ⊚ | ○ | ○ | ○ | ○ | ○ | ○ | Δ | ○ | ○ | ⊚ |
| Elutioin amount (80°C) | Judgment | ⊚ | ⊚ | ○ | ○ | ○ | ○ | ○ | ○ | Δ | Δ | ○ | × | Δ | ○ | ⊚ |
| Flexibility | Judgment | ⊚ | ⊚ | ⊚ | ⊚ | ⊚ | ⊚ | ⊚ | ⊚ | ⊚ | ⊚ | ⊚ | ⊚ | ⊚ | ⊚ | ⊚ |
| Overall evaluation | Judgment | 5 | 5 | 4 | 4 | 4 | 3 | 3 | 3 | 3 | 2 | 3 | 2 | 3 | 3 | 5 |
| | | | | | | | | | | | | | | | | |

| **Comparative Example** | | 1 | 2 | 3 | 4 | 5 | 6 | 7 | | | | | | | | |
|---|---|---|---|---|---|---|---|---|---|---|---|---|---|---|---|---|
| | Number of layers | 1 | 4 | 4 | 4 | 4 | 4 | 4 | | | | | | | | |
| First resin layer | Material | Adhesive ETFE2 | PA elastomer | Adhesive ETFE2 | Adhesive ETFE2 | Adhesive ETFE6 | Adhesive ETFE7 | Adhesive ETFE2 | | | | | | | | |
| | Thickness | 0.2 | 0.2 | 0.03 | 0.8 | 0.2 | 0.2 | 0.2 | | | | | | | | |
| | F thickness/overall thickness% | 1 | 14.3 | 0.8 | 22.9 | 5.7 | 5.7 | 20 | | | | | | | | |
| | Flexural modulus | 770 | 78 | 770 | 770 | 1500 | 400 | 770 | | | | | | | | |
| Second resin layer | Material | | ZL1105 | ZL1105 | ZL1105 | ZL1105 | ZL1105 | ZL1105 | | | | | | | | |
| | Thickness | | 0.2 | 0.2 | 0.2 | 0.2 | 0.2 | 0.1 | | | | | | | | |
| Third resin layer | Material | | P-880 | P-880 | P-880 | P-880 | P-880 | P-880 | | | | | | | | |
| | Thickness | | 1.6 | 1.77 | 1 | 1.6 | 1.6 | 0.3 | | | | | | | | |
| Reinforcement layer | Material | | Polyester fiber | Polyester fiber | Polyester fiber | Polyester fiber | Polyester fiber | Polyester fiber | | | | | | | | |
| Outerm ost layer | Material | | P-880 | P-880 | P-880 | P-880 | P-880 | P-880 | | | | | | | | |
| | Thickness | | 1.5 | 1.5 | 1.5 | 1.5 | 1.5 | 0.4 | | | | | | | | |
| Elution amount (25°C) | Judgment | Not evaluated | × | × | ⊚ | ⊚ | × | ⊚ | | | | | | | | |
| Elution amount (80°C) | Judgment | Not evaluated | × | × | ⊚ | ⊚ | × | ⊚ | | | | | | | | |
| Flexibility | Judgment | × | ⊚ | ⊚ | × | × | ⊚ | × | | | | | | | | |
| Overall evaluation | Judgment | 1 | 1 | 1 | 1 | 1 | 1 | 1 | | | | | | | | |

The flexible tubes in Examples 2 to 30 and Comparative Examples 3 to 7 were obtained in the same manner as in Example 1 by properly controlling the material and thickness of each layer so that the values shown in Table 1 were obtained.

In Comparative Example 1, adhesive ETFE 2 was extruded so that the thickness was 0.2 mm as shown in Table 1 to obtain a single layer tube with an internal diameter of 9 mm and an outer diameter of 9.4 mm.

In Comparative Example 2, as shown in Table 1, a first resin layer including a polyamide elastomer (Pebax (registered trademark) MX1205 manufactured by Arkema), a second resin layer including Polyamide 12 (ZL1105 manufactured by Polyplastics-Evonik Corporation) with a flexural modulus of 300 MPa to which a hydroxybenzoic acid alkyl ester-based plasticizer with a molecular weight of 250 to 350 was added as a plasticizer, and a third resin layer including a carbonate-based polyurethane elastomer (P-880 manufactured by Dainichiseika Color & Chemicals Mfg. Co., Ltd.) with a shore A hardness of 83 and a rebound resilience of 45% were melt and integrally formed by coextrusion so that the thickness of the first resin layer was 0.2 mm, the thickness of the second resin layer was 0.2 mm and the thickness of the third resin layer was 1.6 mm. Subsequently, polyester fiber was wound thereon using a braiding machine, and the outermost layer including a carbonate-based polyurethane elastomer (P-880 manufactured by Dainichiseika Color & Chemicals Mfg. Co., Ltd.) was extruded and laminated on the outer side of the polyester fiber so that the overall thickness of a flexible tube was 3.5 mm to obtain the flexible tube with an internal diameter of 19 mm and an outer diameter of 26 mm.

In Examples 1 to 30, the thickness of the first resin layer is within a range from 0.05 to 0.5 mm and the thickness of the first resin layer accounts for 1 to 16% of an overall thickness of the flexible tubes, and thus the overall evaluation is 2 points or higher. The flexible tubes have enough flexibility and a smaller amount of eluted substances for the use in e.g. manufacturing plants for food including beverages, cosmetics, perfume, pharmaceutical products and others.

Among these, the overall evaluation is 4 points or higher in Examples 10 to 20. <Elution properties> at 80°C is good or better (above 90 ppm and 120 ppm or less) and <Flexibility> is good(○) or better (11 or more and lower than 13), and thus the amount of eluted substances is smaller and flexibility is excellent. In Examples 10 to 17, particularly, the overall evaluation is 5 points or higher. <Elution properties> at 80°C is very good(⊚) (90 ppm or less) and <Flexibility> is very good(0) (lower than 11), and thus the amount of eluted substances is smaller and flexibility is more excellent.

In Comparative Examples 1 to 7, the overall evaluation is 1 point (either <Elution properties> or <Flexibility> was poor(×)), and either <Elution properties> or <Flexibility> had a bad evaluation result.

In Comparative Example 1, elution was not caused because it had a single layer structure, and the evaluation of <Elution properties> could not be made. In addition, because the flexible tube does not have the outer layer to retain the cross-sectional circle shape when the flexible tube is bent, <Flexibility> is poor(×) (15 or more), which is a bad evaluation result. There are not eluted substances; however, flexibility is significantly low. The flexible tube does not have enough flexibility for the use in e.g. manufacturing plants for food including beverages, cosmetics, perfume, pharmaceutical products and others.

In Comparative Example 2, <Flexibility> is very good(⊚) (less than 11), and thus flexibility is excellent. However, the plasticizer eluted from the resin itself in the first resin layer, and thus <Elution properties> is poor(×) (above 150 ppm), and the amount of eluted substances is greater. The flexible tube does not have preferred elution properties for the use in e.g. manufacturing plants for food including beverages, cosmetics, perfume, pharmaceutical products and others.

In Comparative Example 3, the thickness of the first resin layer is thin, 0.03 mm, and thus <Flexibility> is very good (⊚) (less than 11), and flexibility is excellent. However, e.g. the plasticizer easily penetrates the first resin layer, and <Elution properties> is poor(×) (above 150 ppm), which is a bad evaluation result. The flexible tube does not have preferred elution properties for the use in e.g. manufacturing plants for food including beverages, cosmetics, perfume, pharmaceutical products and others.

In Comparative Example 4, the thickness of the first resin layer is thick, 0.8 mm, and thus e.g. the plasticizer does not easily penetrate the first resin layer. <Elution properties> are very good (⊚) (50 ppm or less), and thus the amount of eluted substances is smaller. However, <Flexibility> is poor(×) (15 or more), which is a bad evaluation result, and flexibility is significantly low. The flexible tube does not have enough flexibility for the use in e.g. manufacturing plants for food including beverages, cosmetics, perfume, pharmaceutical products and the like.

In Comparative Example 5, the flexural modulus of the first resin layer is high, 1500 MPa, and thus <Elution properties> are very good (⊚) (50 ppm or less), and the amount of eluted substances is smaller. However, <Flexibility> is poor(×) (15 or more), which is a bad evaluation result, and flexibility is significantly low. The flexible tube does not have enough flexibility for the use in e.g. manufacturing plants for food including beverages, cosmetics, perfume, pharmaceutical products and others.

In Comparative Example 6, the flexural modulus of the first resin layer is small, 400 MPa, and thus <Flexibility> is very good(0) (lower than 11), and flexibility is excellent. However, e.g. the plasticizer easily penetrates the first resin layer, and <Elution properties> are poor(×) (above 150 ppm), which is a bad evaluation result. The flexible tube does not have preferred elution properties for the use in e.g. manufacturing plants for food including beverages, cosmetics, perfume, pharmaceutical products and others.

In Comparative Example 7, the thickness of the first resin layer is within a range from 0.05 to 0.5 mm, and e.g. the plasticizer does not easily penetrate the first resin layer. <Elution properties> are very good(⊚) (50 ppm or less), and the amount of eluted substances is smaller. However, because the thickness of the first resin layer is thick, 20% with respect to the overall thickness of the flexible tube, other layers on the outer side of the first resin layer cannot retain the cross-sectional circle shape of the first resin layer, which becomes flat. <Flexibility> is poor (×) (15 or more), which is a bad evaluation result, and flexibility is significantly low. The flexible tube does not have enough flexibility for the use in e.g. manufacturing plants for food including beverages, cosmetics, perfume, pharmaceutical products and others.

From the results, in a flexible tube including at least a first resin layer which includes a fluororesin and has a thickness of 0.05 to 0.5 mm and accounts for 1 to 16% of an overall thickness of the flexible tube, and a second resin layer including a thermoplastic resin different from the first resin layer, when the fluororesin has a flexural modulus of 500 to 1200 MPa, as measured by ASTM D790, the amount of eluted substances obtained by analyzing an eluate obtained after putting heptane as a solvent into the flexible tube and allowing the flexible tube to stand at 25°C for 60 minutes is smaller, 150 ppm or less, and flexibility is excellent. Furthermore, the amount of eluted substances obtained by analyzing an eluate obtained after putting heptane as a solvent into the flexible tube and allowing the flexible tube to stand at 80°C for 90 minutes is smaller, 150 ppm or less, and flexibility is excellent. The flexible tube has a smaller amount of eluted substances and flexibility for the use in e.g. manufacturing plants for food including beverages, cosmetics, perfume, pharmaceutical products and others.

## Claims

1. A flexible tube, comprising at least a first resin layer which comprises a fluororesin and has a thickness of 0.05 to 0.5 mm and accounts for 1 to 16% of an overall thickness of the flexible tube, and a second resin layer which comprises a thermoplastic resin different from the first resin layer, wherein the fluororesin has a flexural modulus of 500 to 1200 MPa, as measured by ASTM D790, and an amount of eluted substances obtained by analyzing an eluate obtained after putting heptane as a solvent into the flexible tube and allowing the flexible tube to stand at 25°C for 60 minutes is 150 ppm or less.

2. The flexible tube according to claim 1, wherein an amount of eluted substances obtained by analyzing an eluate obtained after putting heptane as a solvent into the flexible tube and allowing the flexible tube to stand at 80°C for 90 minutes is 150 ppm or less.
